# EUROPÄISCHE PATENTANMELDUNG

(11) **EP 3 130 939 A1**
(43) Veröffentlichungstag der Anmeldung: **15.02.2017**
(21) Anmeldenummer: 15180954.8
(22) Anmeldetag: 13.08.2015
(51) Int. Cl.: G01S 13/00, E01C 19/48

(54) **STRASSENFERTIGER MIT EINER RADARBASIERTEN NIVELLIEREINRICHTUNG UND STEUERVERFAHREN**

(71) Anmelder: Joseph Vögele AG, 67075 Ludwigshafen (DE)
(72) Erfinder: BUSCHMANN, Martin, 67435 Neustadt (DE); EUL, Achim, 68305 Mannheim (DE); WEISER, Ralf, 68526 Ladenburg (DE); NOLL, Tobias, 76835 Roschbach (DE)
(74) Vertreter: Grünecker Patent- und Rechtsanwälte PartG mbB

(57) **Zusammenfassung**

Ein erfindungsgemäßer Straßenfertiger (1) umfasst einem Gutbunker zur Aufnahme von Einbaugut und eine mit Zugarmen (4) an einem Chassis (3) des Straßenfertigers (1) gehaltene Einbaubohle (8) zum Verdichten von Einbaugut. Zudem ist eine Radar-Sensoreinheit (20) vorgesehen, die zum Messen der Abstände (d1-d5) zwischen der Radar-Sensoreinheit (20) und zumindest zwei Bodenpositionen (P1-P5) konfiguriert ist. Eine Steuereinheit (30) des Straßenfertigers (1) ist zum Einstellen einer Lage der Einbaubohle (8) relativ zu dem Chassis (3) basierend auf den gemessenen Abständen (di-d5) konfiguriert. Zudem ist ein entsprechendes Verfahren zum Steuern eines Straßenfertigers (1) angegeben.

## Beschreibung

Die vorliegende Erfindung betrifft das technische Gebiet der Straßenfertiger. Insbesondere betrifft die Erfindung Straßenfertiger mit einer Einbaubohle zum Verdichten von Einbaugut sowie Verfahren zum Steuern solcher Straßenfertiger.

Bei Straßenfertigern ist die Einbaubohle vorteilhafterweise nicht starr mit dem Chassis verbunden, sondern über Zugarme daran aufgehängt. Dabei wird die Einbaubohle von dem eingebauten Material beziehungsweise dem einzubauenden Material schwimmend getragen. Um die Schichtstärke und Ebenheit der einzubauenden Schicht zu kontrollieren, kann ein Anstellwinkel der Einbaubohle über die Zugarme auf bekannte Art und Weise verändert werden. Um gegebene Anforderungen an Schichtstärke und/oder Ebenheit der einzubauenden Schicht erfüllen zu können, können Straßenfertiger mit geeigneten Regelsystemen für die Lage der Einbaubohle relativ zu dem Chassis ausgestattet sein, sogenannten Nivelliersystemen. Für eine solche Regelung muss die Relativlage der Einbaubohle bezüglich einer Referenz, beispielsweise einem bereits eingebauten Teil des Belags oder einem mit dem Belag zu versehenden Untergrund, bestimmt werden.

Aus der EP 0 542 297 A1 ist ein Straßenfertiger mit an einer Halterung angebrachten Ultraschallsensoren offenbart. Es sind dabei zumindest drei Ultraschallsensoren zur Bestimmung der Abstände zwischen den Sensoren und einer Referenzfläche vorgesehen. Um lokale Unebenheiten der Referenzfläche auszugleichen, sollen die Sensoren in Fahrtrichtung des Straßenfertigers möglichst weit voneinander beabstandet sein. Die damit einhergehende große Abmessung der sich in Fahrtrichtung des Straßenfertigers erstreckenden Halterung für die Ultraschallsensoren ist sowohl in Bezug auf das Handling des Straßenfertigers als auch den relativ großen Aufwand für den An- und Abbau der Halterung nachteilig.

Aus der DE 100 60 903 A1 ist ein alternativer Höhenfühler für einen Straßenfertiger bekannt. Dabei sind drei Lasermessköpfe auf jeweils voneinander beabstandete Messpunkte auf einer Referenzfläche gerichtet. Mittels der von den Lasermessköpfen emittierten und nach einer Reflektion durch die Referenzfläche wieder detektierten Signale wird der Abstand der Lasermessköpfe zu der Referenzfläche bestimmt und darauf basierend die Einbaubohle angesteuert.

Es ist Aufgabe der vorliegenden Erfindung, einen Straßenfertiger beziehungsweise ein Verfahren zum Steuern eines Straßenfertigers in Bezug auf die Nivellierqualität und Handhabbarkeit beim Einbauvorgang zu verbessern.

Diese Aufgabe wird durch den Gegenstand der Ansprüche 1 und 9 gelöst. Die abhängigen Ansprüche geben vorteilhafte Ausführungsformen der Erfindung an.

Ein erfindungsgemäßer Straßenfertiger umfasst einen vorzugsweise in Fahrtrichtung des Straßenfertigers vorne gelegenen Gutbunker zur Aufnahme von Einbaugut. Das Einbaugut kann mittels einer an dem Straßenfertiger vorgesehenen Fördereinrichtung vor eine hinter dem Straßenfertiger gezogene Einbaubohle gebracht werden. Dort kann das Einbaugut mittels einer typischerweise vorgesehenen Verteilerschnecke senkrecht zur Fahrtrichtung des Straßenfertigers verteilt werden, um eine gleichmäßige Menge an Einbaugut über die gesamte Einbaubreite zu erhalten. Die Einbaubohle des erfindungsgemäßen Straßenfertigers ist zum Verdichten des Einbauguts vorgesehen und wird mit Zugarmen an einem Chassis des Straßenfertigers gehalten.

Weiterhin umfasst der erfindungsgemäße Straßenfertiger eine Radar-Sensoreinheit, die zum Messen der Abstände zwischen der Radar-Sensoreinheit und zumindest zwei Bodenpositionen konfiguriert ist. Bei den Bodenpositionen handelt es sich um Positionen, die nicht an dem Straßenfertiger liegen. Die Bodenpositionen können Positionen auf der für den Einbau vorgesehenen Trasse sein oder auch neben der Trasse liegen. Der Straßenfertiger umfasst zudem eine Steuereinheit, die zum Einstellen einer Lage der Einbaubohle relativ zu dem Chassis basierend auf den gemessenen Abständen konfiguriert ist. Dazu kann die Steuereinheit dazu konfiguriert sein, einen oder mehrere Hydraulikzylinder zum Verstellen eines Anlenkpunktes der Zugarme an dem Chassis zu betätigen.

Die Radar-Sensoreinheit kann die Abstände zwischen der Radar-Sensoreinheit und den zumindest zwei Bodenpositionen dadurch messen, dass sie Radarstrahlung auf jede der Bodenpositionen gerichtet abstrahlt und die zurückreflektierte Strahlung detektiert. Durch den Zeitunterschied zwischen Abstrahlung und Detektion kann bei einem gepulsten Radar der Abstand zu der jeweiligen Bodenposition bestimmt werden. Es ist auch denkbar, ein nicht gepulstes Radar mit kontinuierlicher Abstrahlung von Radarstrahlung vorzusehen, wobei hier die Abstandsmessung beispielsweise mittels Auswertung eines Dopplereffekts erfolgen kann.

Eine Abstandsmessung mittels einer Radar-Sensoreinheit funktioniert auch sehr gut über große Abstände, wogegen beispielsweise Ultraschallsensoren für eine ausreichend genaue Messung möglichst dicht (zirka 30 cm) an der zu vermessenden Bodenposition liegen müssen. Daher ist es bei der vorliegenden Erfindung nicht erforderlich, dass zum Vermessen von weit auseinanderliegenden Bodenpositionen eine ausladende Halterung für Sensoreinheiten an dem Straßenfertiger vorgesehen ist. Im Gegenteil können auch bei einer kompakten und lokalisiert vorliegenden Radar-Sensoreinheit unterschiedliche Bodenpositionen in großen Abständen zueinander vermessen werden. Beispielsweise können zwei aufeinanderfolgende der zumindest zwei Bodenpositionen einen Mindestabstand von weniger als 10 cm, 20 cm, 50 cm, 1 m, 2 m, 5 m, 10 m oder 20 m aufweisen. Der gesamte Messbereich der Radar-Sensoreinheit, also der größte Abstand zwischen zwei der zumindest zwei Bodenpositionen, kann beispielsweise über 10 m, über 15 m oder über 20 m betragen. Die angegebenen Abstände zwischen den Bodenpositionen können sich auf einen stillstehenden Straßenfertiger oder einen Straßenfertiger während eines Einbauvorgangs beziehen.

Überraschenderweise hat es sich gezeigt, dass mit dem erfindungsgemäßen radarbasierten Messverfahren die Abstände zuverlässiger und genauer erfassbar sind als mit einem Lasersystem.

Vorzugsweise liegen die zumindest zwei Bodenpositionen auf einer gemeinsamen, zur Einbaufahrtrichtung des Straßenfertigers parallelen Geraden. Damit kann zum Einstellen der Lage der Einbaubohle der Verlauf des Planums über eine gewisse Strecke berücksichtigt werden und lokale Unebenheiten haben einen geringeren Einfluss auf das Ergebnis der Nivellierung. Dieses Ergebnis kann weiter verbessert werden, wenn die Abstände zwischen der Radar-Sensoreinheit und mehr als zwei, insbesondere mehr als fünf, mehr als 10, mehr als 20, mehr als 30, mehr als 50, mehr als 100 oder mehr als 150 Bodenpositionen gemessen werden.

Durch die Langreichweitigkeit der radarbasierten Messung kann die Radar-Sensoreinheit kompakt an einem an dem Chassis, einem Zugarm oder der Einbaubohle oder einem anderen Teil des Straßenfertigers befestigten Mast, vorzugsweise vertikalen Mast, angebracht sein.

Das Messen der Abstände zwischen der Radar-Sensoreinheit und den zumindest zwei Bodenpositionen kann zum Beispiel gleichzeitig oder zeitlich nacheinander erfolgen. Insbesondere kann ein Zeitintervall zwischen dem Messen der Abstände zwischen der Radar-Sensoreinheit und zwei aufeinanderfolgenden der zumindest zwei Bodenpositionen kleiner sein, vorzugsweise um einen Faktor 20, einen Faktor 10, einen Faktor 5 oder einen Faktor 2, als der Quotient aus dem Abstand der aufeinanderfolgenden Bodenpositionen und der Geschwindigkeit des Straßenfertigers. Es ist auch denkbar, dass das Zeitintervall zwischen dem Messen der Abstände zwischen der Radar-Sensoreinheit und zwei aufeinanderfolgenden der zumindest zwei Bodenpositionen kleiner als 50 ms, 1 s, 5 s, 10 s oder 30 s ist.

Die Radar-Sensoreinheit kann einen zwischen zumindest zwei Messpositionen zum Messen des Abstands zwischen der Radar-Sensoreinheit und den zumindest zwei Bodenpositionen verschwenkbaren Radarsensor umfassen. Mit diesem können die zumindest zwei Bodenpositionen zeitlich hintereinander vermessen werden. Durch eine solche Anordnung ist das Vermessen einer Vielzahl von Bodenpositionen mit lediglich einem Radarsensor möglich. Der zeitliche Versatz zwischen den Messungen wirkt sich aufgrund der langsamen Einbaugeschwindigkeit von Straßenfertigern von wenigen Metern pro Minute nicht negativ aus.

Die Radar-Sensoreinheit kann einen Radarsensor mit einer Antenne und einem Radom umfassen. Das Radom kann dabei dazu ausgelegt sein, von der Antenne emittierte Strahlung zu fokussieren und kann zwischen zumindest zwei Messpositionen verschwenkbar sein, in denen die Strahlung jeweils auf unterschiedliche der zumindest zwei Bodenpositionen fokussiert wird. Auch hier ist zum Vermessen der verschiedenen Bodenpositionen lediglich ein einzelner Radarsensor nötig. Aufgrund der fokussierenden Funktion des Radoms ist es ausreichend, dieses zu verschwenken, so dass der Radarsensor in seiner Gesamtheit nicht verschwenkbar sein muss. Das Radom kann hier zugleich als Schutzabdeckung des Radarsensors und als fokussierendes Element wirken.

Es ist auch denkbar, dass die Radar-Sensoreinheit einen Radarsensor mit einer Antenne und einer dielektrischen Linse umfasst. Dabei kann die dielektrische Linse dazu ausgelegt sein, von der Antenne emittierte Strahlung zu fokussieren und zwischen zumindest zwei Messpositionen verschwenkbar sein, in denen die Strahlung jeweils auf unterschiedliche der zumindest zwei Bodenpositionen fokussiert wird. Auch hier ist lediglich ein einzelner Radarsensor notwendig, um mehrere Bodenpositionen zu vermessen.

Alternativ kann die Radar-Sensoreinheit zumindest zwei unter festen Winkeln zueinander stehende Radarsensoren umfassen, die jeweils dazu ausgelegt sind, den Abstand zwischen der Radar-Sensoreinheit und einer der zumindest zwei Bodenpositionen zu vermessen. Dabei kann jeder Bodenposition ein eigener Radarsensor zugeordnet sein. In einer solchen Konfiguration können sämtliche Bodenpositionen gleichzeitig vermessen werden. Selbstverständlich können aber auch die Bodenpositionen nacheinander vermessen werden, allerdings durch verschiedene Radarsensoren. Es sind hier keine Aktoren zum Verschwenken der Radarsensoren notwendig.

Zum Einstellen der Lage der Einbaubohle kann die Steuereinheit des Straßenfertigers aus den gemessenen Abständen und der bekannten Ausrichtung der Radar-Sensoreinheit vertikale Abstände zwischen der Radar-Sensoreinheit und den Bodenpositionen bestimmen. Da zudem vorzugsweise die Position, insbesondere die Höhenposition, der Radar-Sensoreinheit in Bezug auf die Einbaubohle bekannt ist, können geeignete Stellwerte für die Lage der Einbaubohle verändernde Aktoren berechnet werden, um eine gewünschte Lage der Einbaubohle in Bezug auf die Bodenpositionen zu erhalten. Um eine definierte Schichtstärke zu erhalten, kann beispielsweise der vertikale Abstand zwischen einer Hinterkante der Einbaubohle und den Bodenpositionen auf einen konstanten und/oder von einem Benutzer festzulegenden Wert geregelt werden.

Die Steuereinheit des Straßenfertigers kann beispielsweise über eine Mittelwertbildung sämtliche gemessenen Abstände berücksichtigen. Dazu kann für jeden gemessenen Abstand ein vertikaler Abstand berechnet werden. Diese können dann gemittelt werden und der Mittelwert zur Berechnung des Stellwertes für die Lage der Einbaubohle herangezogen werden. Alternativ kann auch aus jedem berechneten vertikalen Abstand ein separater Stellwert berechnet werden und dann eine Mittelung über die Stellwerte vorgenommen werden, wobei dann der Mittelwert zum Einstellen der Einbaubohle verwendet wird.

Es sind auch andere Vorgehensweisen zum Erhalten geeigneter Stellwerte zum Einstellen der Lage der Einbaubohle aus den gemessenen Abständen denkbar. Beispielsweise kann die Steuereinheit aus den gemessenen Abständen und der jeweils bekannten Ausrichtung der Radar-Sensoreinheit eine Gerade bestimmen, die die Lage der BodenPositionen möglichst gut beschreibt, beispielsweise durch eine Berechnung einer linearen Regressionsgeraden. Ausgehend von der Regressionsgeraden und der bekannten Position, insbesondere Höhenposition, der Radar-Sensoreinheit relativ zu der Einbaubohle kann ein geeigneter Stellwert für die Lage der Einbaubohle berechnet werden.

Es ist in allen beschriebenen Varianten denkbar, gemessene Abstände nur zu berücksichtigen, wenn sie in einem bestimmten, vordefinierten Bereich liegen. So kann verhindert werden, dass beispielsweise durch im Strahlweg der Radarstrahlung befindliche Personen oder Gegenstände verfälschte Messungen bei der Einstellung der Einbaubohle berücksichtigt werden.

Die Erfindung betrifft insbesondere auch ein Verfahren zum Steuern des oben beschriebenen erfindungsgemäßen Straßenfertigers. Dabei werden mit der an dem Straßenfertiger vorgesehenen Radar-Sensoreinheit die Abstände zwischen der Radar-Sensoreinheit und zumindest zwei Bodenpositionen gemessen. Durch die Steuereinheit des Straßenfertigers wird die Lage der Einbaubohle relativ zu dem Chassis basierend auf den gemessenen Abständen eingestellt. Weitere Ausgestaltungen des erfindungsgemäßen Verfahrens ergeben sich für den Fachmann aus der obigen Beschreibung des Straßenfertigers.

Im Folgenden soll die Erfindung anhand von Ausführungsbeispielen mit einigen Zeichnungen näher beschrieben werden. Dabei zeigen:
- Figur 1: eine schematische Ansicht eines erfindungsgemäßen Straßenfertigers;
- Figur 2: eine schematische Darstellung der Einbettung der Radar-Sensoreinheit und der Steuereinheit in das System des Straßenfertigers;
- Figur 3a: eine schematische Darstellung der Radar-Sensoreinheit des erfindungsgemäßen Straßenfertigers gemäß einer Ausführungsform;
- Figur 3b: eine schematische Darstellung der Radar-Sensoreinheit des erfindungsgemäßen Straßenfertigers gemäß einer anderen Ausführungsform;
- Figur 3c: eine schematische Darstellung der Radar-Sensoreinheit des erfindungsgemäßen Straßenfertigers gemäß einer weiteren Ausführungsform; und
- Figur 3d: eine schematische Darstellung der Radar-Sensoreinheit des erfindungsgemäßen Straßenfertigers gemäß einer noch weiteren Ausführungsform.

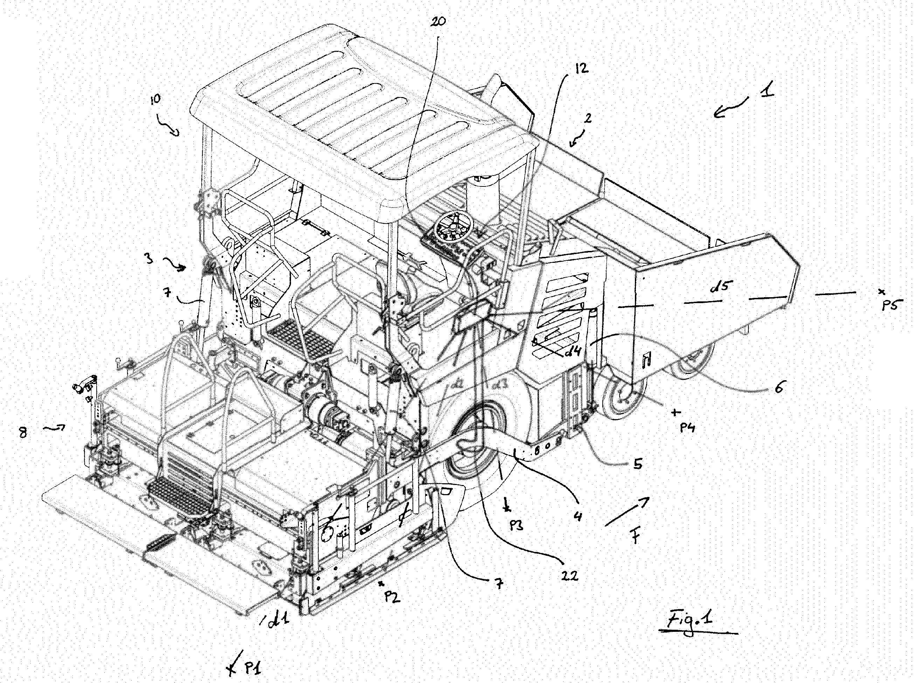

Figur 1 zeigt einen erfindungsgemäßen Straßenfertiger 1, der sich in Fahrtrichtung F über ein Planum bewegt. In Fahrtrichtung F vorne weist der Straßenfertiger 1 einen Gutbunker 2 zur Aufnahme von Einbaugut auf. An einem Chassis 3 des Straßenfertigers 1 ist auf bezüglich der Fahrtrichtung F beiden Seiten des Straßenfertigers 1 jeweils ein Zugarm 4 über einen höhenverstellbaren Anlenkpunkt 5 gehalten. Der Anlenkpunkt 5 ist vorzugsweise mittels eines Anlenk-Hyddraulikzylinders 6 an dem Chassis 3 höhenverstellbar. An einer Hinterseite des Straßenfertigers 1 sind die Zugarme 4 jeweils wieder beidseitig über höhenverstellbare hintere Hydraulikzylinder 7 an dem Chassis 3 angebracht. An den hinteren Enden der Zugarme 4 ist die Einbaubohle 8 des Straßenfertigers 1 aufgehängt. Ein Bedienstand 10 des Straßenfertigers 1 bietet Platz für eine Bedienperson und umfasst Bedien- und Anzeigeeinheiten 12, mittels derer Eingaben zur Steuerung des Straßenfertigers 1 getätigt werden können und Systemdaten zur Information des Benutzers darstellbar sind.

Der erfindungsgemäße Straßenfertiger 1 umfasst eine Radar-Sensoreinheit 20. Diese ist zum Messen der Abstände d1, d2, d3, d4, d5 zwischen der Radar-Sensoreinheit 20 und zumindest zwei Bodenpositionen P1, P2, P3, P4, P5 konfiguriert ist. Wie in Figur 1 gezeigt, liegen die Bodenpositionen P1-P5 vorzugsweise auf einer gemeinsamen, zur Einbaufahrtrichtung F des Straßenfertigers 1 parallelen Geraden. Die Radar-Sensoreinheit 20 kann an einem an einem Zugarm 4 befestigten Mast 22 angebracht sein. Alternativ ist es denkbar, dass der Mast 22 mit der Radar-Sensoreinheit 20 an dem Chassis 3 oder der Einbaubohle 8 oder einem anderen Teil des Straßenfertigers 1 angebracht ist. Es ist auch denkbar, die Radar-Sensoreinheit 20 direkt, ohne Mast 22 an dem Straßenfertiger 1 anzubringen.

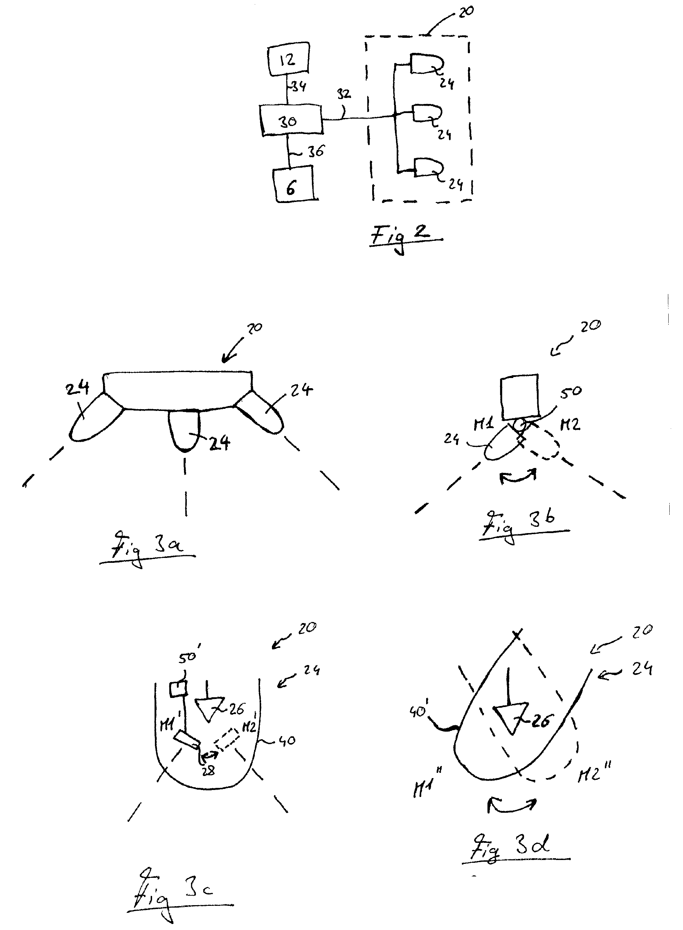

Wie in Figur 2 dargestellt, umfasst der Straßenfertiger 1 eine Steuereinheit 30, die über eine Steuerleitung 32 von der Radar-Sensoreinheit 20 die gemessenen Abstände erhält. Die Steuereinheit 30 kann dann über eine weitere Steuerleitung 36 die Anlenk-Hydraulikzylinder 6 ansteuern und damit über die Zugarme 4 den Anstellwinkel der Einbaubohle 8 verstellen. Es wäre auch denkbar, dass die Steuereinheit 30 zusätzlich oder alternativ die hinteren Hydraulikzylinder 7 ansteuern kann, um die Lage der Einbaubohle 8 zu verändern. Über eine dritte Steuerleitung 34 ist die Steuereinheit 30 mit der Eingabeeinheit 12 verbunden und kann Vorgabewerte für die Schichtstärke oder ähnliches erhalten. Es ist auch denkbar, dass die Steuereinheit 30 solche Vorgabewerte anderweitig erhält, beispielsweise aus einer Speichereinheit. Die Steuereinheit 30 berechnet basierend auf den gemessenen Abständen d1-d5 sowie den von der Eingabeeinheit 12 erhaltenen Vorgaben an die Anlenk-Hydraulikzylinder 6 auszugebende Stellwerte. Gemäß einer bevorzugten Ausführungsform kann somit eine vollständig automatische Nivellierung erreicht werden, bei der lediglich einmalig ein Vorgabewert festgelegt werden muss. Der Vorgabewert kann aber auch während des Einbauvorgangs verändert werden.

Die Figuren 3a bis 3d zeigen verschiedene Ausführungsformen der Radar-Sensoreinheit 20. Gemäß der in Figur 3a gezeigten Ausführungsform umfasst die Radar-Sensoreinheit 20 mehrere (zumindest zwei) unter festen Winkeln zueinander stehende Radar-Sensoren 24. Diese sind jeweils so angeordnet, dass sie den Abstand d1-d5 zwischen der Radar-Sensoreinheit 20 und jeweils einer der zu vermessenden Bodenpositionen P1-P5 messen.

Gemäß der in Figur 3b gezeigten alternativen Ausführungsform umfasst die Radar-Sensoreinheit 20 einen Radarsensor 24, der zum Messen der Abstände d1-d5 zwischen der Radar-Sensoreinheit 20 und den Bodenpositionen P1-P5 zwischen mehreren Messpositionen M1, M2 (zwei gezeigt) verschwenkbar ist. Dabei korrespondiert jeweils eine Messposition M1, M2 zu einer zu vermessenden Bodenposition P1-P5. Um die Verschwenkbarkeit des Radarsensors 24 zu gewährleisten, kann dieser mittels eines Schwenkgelenks 50 angebracht sein, das vorzugsweise von der Steuereinheit 30 gesteuert wird.

Gemäß der in Figur 3c gezeigten Ausführungsform umfasst die Radar-Sensoreinheit 20 einen Radarsensor 24 mit einer Antenne 26 und einer dielektrischen Linse 28. Die Antenne 26 ist dabei zum Emittieren der Radarstrahlung konfiguriert. Vorzugsweise wird dieselbe Antenne 26 genutzt, um die von der jeweiligen Bodenposition P1-P5 reflektierte Radar-Strahlung wieder zu detektieren. Die dielektrische Linse 28 ist dazu ausgelegt und positioniert, die von der Antenne 26 emittierte Radar-Strahlung zu fokussieren. Die dielektrische Linse 28 ist zwischen mehreren Messpositionen M1', M2' (zwei gezeigt) verschwenkbar, wobei in den verschiedenen Messpositionen M1', M2' die von der Antenne 26 emittierte Radarstrahlung auf unterschiedliche der zu vermessenden Bodenpositionen P1-P5 fokussiert wird. Das Verschwenken der dielektrischen Linse 28 kann durch einen geeigneten mechanischen Aktor 50', der vorzugsweise von der Steuereinheit 30 gesteuert wird, bewerkstelligt werden. Um die Antenne 26 sowie die dielektrische Linse 28 vor äußeren Einflüssen und Verschmutzung zu schützen, sind diese vorzugsweise in einem für die Radarstrahlung möglichst durchlässigen Radom 40 untergebracht.

Die Funktionsweise der in Figur 3d gezeigten Ausführungsform ähnelt der Funktionsweise der Ausführungsform von Figur 3c. Auch hier umfasst die Radar-Sensoreinheit 20 einen Radarsensor 24 mit einer Antenne 26 zum Emittieren der Radar-Strahlung. Vorzugsweise wird auch hier dieselbe Antenne 26 zum Detektieren der reflektierten Radar-Strahlung eingesetzt. Im Gegensatz zu der Ausführungsform von Figur 3c ist hier allerdings keine dielektrische Linse vorgesehen. Die Fokussierung der Radar-Strahlung auf die jeweilige Bodenposition P1 - P5 erfolgt hier über das die Antenne 26 abdeckende Radom 40'. Um eine Fokussierung auf die verschiedenen Bodenpositionen P1-P5 zu ermöglichen, ist dieses Radom 40' zwischen mehreren zu den zu vermessenden Bodenpositionen P1-P5 korrespondierenden Messpositionen M1 ", M2" (zwei gezeigt) verschwenkbar, vorzugsweise gesteuert durch die Steuereinheit 30. Auch hier wird die Antenne 26 durch das Radom 40' vor äußeren Einflüssen sowie Verschmutzung geschützt.

Es versteht sich, dass auch die Radarsensoren 24 der in den Figuren 3a und 3b gezeigten Radar-Sensoreinheiten 20 jeweils eine Antenne zum Emittieren der Radar-Strahlung aufweisen. Vorzugsweise wird auch hier dieselbe Antenne zusätzlich zum Detektieren der reflektieren Radarstrahlung verwendet. Es ist allerdings auch denkbar, zum Detektieren der reflektierten Radarstrahlung den jeweiligen Radarsensor 24 mit einer zusätzlichen Antenne auszustatten.

## Patentansprüche

1. Straßenfertiger (1), mit:
einem Gutbunker (2) zur Aufnahme von Einbaugut;
einer mit Zugarmen (4) an einem Chassis (3) des Straßenfertigers (1) gehaltenen Einbaubohle (8) zum Verdichten von Einbaugut;
einer Radar-Sensoreinheit (20), die konfiguriert ist zum Messen der Abstände (d1-d5) zwischen der Radar-Sensoreinheit (20) und zumindest zwei Bodenpositionen (P1-P5); und
einer Steuereinheit (30), die konfiguriert ist zum Einstellen einer Lage der Einbaubohle (8) relativ zu dem Chassis (3) basierend auf den gemessenen Abständen (d1-d5).

2. Straßenfertiger gemäß Anspruch 1, **dadurch gekennzeichnet, dass** die zumindest zwei Bodenpositionen (P1-P5) auf einer gemeinsamen, zu einer Einbaufahrtrichtung (F) des Straßenfertigers (1) parallelen Geraden liegen.

3. Straßenfertiger gemäß Anspruch 1 oder 2, **dadurch gekennzeichnet, dass** die Radar-Sensoreinheit (20) an einem an dem Chassis (3), einem der Zugarme (4) oder der Einbaubohle (8) befestigten, vorzugsweise vertikalen, Mast (22) angebracht ist.

4. Straßenfertiger gemäß einem der vorangehenden Ansprüche, **dadurch gekennzeichnet, dass** die Radar-Sensoreinheit (20) einen Radarsensor (24) umfasst, der zum Messen der Abstände (d1-d5) zwischen der Radar-Sensoreinheit (20) und den zumindest zwei Bodenpositionen (P1-P5) zwischen zumindest zwei Messpositionen (M1, M2) verschwenkbar ist.

5. Straßenfertiger gemäß einem der Ansprüche 1 bis 3, **dadurch gekennzeichnet, dass** die Radar-Sensoreinheit (20) einen Radarsensor (24) mit einer Antenne (26) und einem Radom (40') umfasst, wobei das Radom (40') dazu ausgelegt ist, von der Antenne (26) emittierte Strahlung zu fokussieren, und das Radom (40') zwischen zumindest zwei Messpositionen (M1 ", M2") verschwenkbar ist, in denen die Strahlung jeweils auf unterschiedliche der zumindest zwei Bodenpositionen (P1- P5) fokussiert wird.

6. Straßenfertiger gemäß einem der Ansprüche 1 bis 3, **dadurch gekennzeichnet, dass** die Radar-Sensoreinheit (20) einen Radarsensor (24) mit einer Antenne (26) und einer dielektrischen Linse (28) umfasst, wobei die dielektrischen Linse (28) dazu ausgelegt ist, von der Antenne (26) emittierte Strahlung zu fokussieren, und die dielektrischen Linse (28) zwischen zumindest zwei Messpositionen (M1', M2') verschwenkbar ist, in denen die Strahlung jeweils auf unterschiedliche der zumindest zwei Bodenpositionen (P1-P5) fokussiert wird.

7. Straßenfertiger gemäß einem der Ansprüche 1 bis 3, **dadurch gekennzeichnet, dass** die Radar-Sensoreinheit (20) zumindest zwei unter festen Winkeln zueinander stehende Radarsensoren (24) umfasst, die dazu ausgelegt sind, jeweils den Abstand zwischen der Radar-Sensoreinheit (20) und einer der zumindest zwei Bodenpositionen (P1-P5) zu messen.

8. Straßenfertiger gemäß einem der vorangehenden Ansprüche, **dadurch gekennzeichnet, dass** Steuereinheit (30) oder die Radar-Sensoreinheit (20) dazu konfiguriert ist, die gemessenen Abstände (d1-d5) zwischen der Radar-Sensoreinheit (20) und den zumindest zwei Bodenpositionen (P1-P5) zu mitteln.

9. Verfahren zum Steuern eines Straßenfertigers (1) mit einem Gutbunker (2) zur Aufnahme von Einbaugut und einer mit Zugarmen (4) an einem Chassis (3) des Straßenfertigers (1) gehaltenen Einbaubohle (8) zum Verdichten von Einbaugut, umfassend folgende Verfahrensschritte:
mit einer an dem Straßenfertiger (1) vorgesehenen Radar-Sensoreinheit (20) Messen der Abstände (d1-d5) zwischen der Radar-Sensoreinheit (20) und zumindest zwei Bodenpositionen (P1-P5); und
durch eine Steuereinheit (30) Einstellen einer Lage der Einbaubohle (8) relativ zu dem Chassis (3) basierend auf den gemessenen Abständen (d1-d5).

10. Verfahren gemäß Anspruch 9, **dadurch gekennzeichnet, dass** die zumindest zwei Bodenpositionen (P1-P5) auf einer gemeinsamen, zu einer Einbaufahrtrichtung (F) des Straßenfertigers (1) parallelen Geraden liegen.

11. Verfahren gemäß Anspruch 9 oder 10, **dadurch gekennzeichnet, dass** die Radar-Sensoreinheit (20) an einem an dem Chassis (3), einem der Zugarme (4) oder der Einbaubohle (8) befestigten, vorzugsweise vertikalen, Mast (22) angebracht ist.

12. Verfahren gemäß einem der Ansprüche 9 bis 11, **gekennzeichnet durch** ein Verschwenken eines Radarsensors (24) der Radar-Sensoreinheit (20) zwischen zumindest zwei Messpositionen (M1, M2) zum Messen der Abstände (d1-d5) zwischen der Radar-Sensoreinheit (20) und den zumindest zwei Bodenpositionen (P1-P5).

13. Verfahren gemäß einem der Ansprüche 9 bis 11, **dadurch gekennzeichnet, dass** die Radar-Sensoreinheit (20) einen Radarsensor (24) mit einer Antenne (26) und einem Radom (40') umfasst, wobei das Radom (40') von der Antenne (26) emittierte Strahlung fokussiert, wobei das Verfahren ein Verschwenken des Radoms (40') zwischen zumindest zwei Messpositionen (M1", M2") umfasst, in denen die Strahlung jeweils auf unterschiedliche der zumindest zwei Bodenpositionen (P1-P5) fokussiert wird.

14. Verfahren gemäß einem der Ansprüche 9 bis 11, **dadurch gekennzeichnet, dass** die Radar-Sensoreinheit (20) einen Radarsensor (24) mit einer Antenne (26) und einer dielektrischen Linse (28) umfasst, wobei die dielektrischen Linse (28) von der Antenne (26) emittierte Strahlung fokussiert, wobei das Verfahren ein Verschwenken der dielektrischen Linse (28) zwischen zumindest zwei Messpositionen (M1', M2') umfasst, in denen die Strahlung jeweils auf unterschiedliche der zumindest zwei Bodenpositionen (P1-P5) fokussiert wird.

15. Verfahren gemäß einem der Ansprüche 9 bis 14, **gekennzeichnet durch** ein Mitteln der gemessenen Abstände (d1-d5) zwischen der Radar-Sensoreinheit (20) und den zumindest zwei Bodenpositionen (P1-P5) **durch** die Steuereinheit (30) oder die Radar-Sensoreinheit (20).
